(19) **Europäisches Patentamt / European Patent Office / Office européen des brevets**

(11) **EP 4 617 161 A1**

(12) **EUROPEAN PATENT APPLICATION**
published in accordance with Art. 153(4) EPC

(43) Date of publication:
**17.09.2025 Bulletin 2025/38**

(21) Application number: **23888287.2**

(22) Date of filing: **20.07.2023**

(51) International Patent Classification (IPC):
**B62L 3/08** *(2006.01)* **B60T 7/12** *(2006.01)*
**B60T 8/00** *(2006.01)* **B60T 8/17** *(2006.01)*

(52) Cooperative Patent Classification (CPC):
**B60T 7/12; B60T 8/00; B60T 8/17; B62L 3/08**

(86) International application number:
**PCT/JP2023/026515**

(87) International publication number:
**WO 2024/100932 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.11.2022 JP 2022178486**

(71) Applicant: **Astemo, Ltd.**
**Chiyoda-ku,**
**Tokyo 1000004 (JP)**

(72) Inventors:
• **ATSUTA, Daiki**
 **Hitachinaka-shi, Ibaraki 312-8503 (JP)**
• **YAMAOKA, Takumi**
 **Hitachinaka-shi, Ibaraki 312-8503 (JP)**
• **TSUDA, Fumiya**
 **Hitachinaka-shi, Ibaraki 312-8503 (JP)**

(74) Representative: **Plougmann Vingtoft a/s**
**Strandvejen 70**
**2900 Hellerup (DK)**

(54) **VEHICLE BRAKE CONTROL DEVICE**

(57) A vehicle brake control apparatus includes a first brake operating member configured to operate a first brake, a second brake operating member configured to operate a second brake, a second detection device configured to detect a second operation amount corresponding to an operation of the second brake operating member, an external environment information acquisition device configured to acquire external environment information on surroundings of a vehicle, and a controller. The controller can execute deceleration control of decelerating the vehicle based on a target deceleration of the vehicle set based on the external environment information and a vehicle deceleration obtained by calculation or the like, and executes brake assist control of decelerating the vehicle at a deceleration corresponding to the second operation amount when an operating condition of the deceleration control is satisfied (S4: Yes) and the second operation amount is equal to or greater than a first threshold (S3: Yes) (S5).

FIG.2

**Description**

Technical Field

The present invention relates to a vehicle brake control apparatus.

Background Art

In the related art, a vehicle brake control apparatus that generates a braking force in response to an input from a driver is known (see PTL 1).

Citation List

Patent Literature

PTL 1: WO2022/025095

Summary of Invention

An object of the present invention is to provide a vehicle brake control apparatus capable of appropriately performing brake assist control and decelerating a vehicle when a driver performs a brake operation.

In order to solve the above problem, a vehicle brake control apparatus according to the present invention includes: a first brake operating member configured to operate a first brake for braking a first wheel; a second brake operating member configured to operate a second brake for braking a second wheel; a first detection device configured to detect a first operation amount that varies according to an operation of the first brake operating member; a second detection device configured to detect a second operation amount that varies according to an operation of the second brake operating member; an external environment information acquisition device configured to acquire external environment information on surroundings of a vehicle; and a controller.

The controller is configured to execute deceleration control of decelerating the vehicle based on a target deceleration of the vehicle set based on the external environment information and a vehicle deceleration obtained by detection or calculation, and executes brake assist control of decelerating the vehicle at a deceleration corresponding to the second operation amount when an operating condition of the deceleration control is satisfied and the second operation amount is equal to or greater than a first threshold.

According to this configuration, when the operating condition of the deceleration control is satisfied during the operation of the second brake operating member, the brake assist control based on the operation of the second brake operating member is executed, so that the operation of a driver can be assisted to decelerate the vehicle.

The controller may be configured to calculate a distance between an obstacle in front of the vehicle and the vehicle and a relative speed, which is a speed of the vehicle with respect to the obstacle, based on the external environment information, and the operating condition of the deceleration control may be a condition that the distance is equal to or less than a first distance threshold and an absolute value of the relative speed is equal to or greater than a first speed threshold.

According to this configuration, the deceleration control can be appropriately executed based on the distance and the relative speed.

The controller may calculate the vehicle deceleration based on a wheel speed.

According to this configuration, since the controller calculates the vehicle deceleration, a sensor or the like that detects the vehicle deceleration is unnecessary.

The vehicle brake control apparatus may further include the first detection device configured to detect the first operation amount that varies according to the operation of the first brake operating member, and the controller may execute braking force control of controlling the braking force of the second brake based on the first operation amount when the first operation amount is equal to or greater than a second threshold.

According to this configuration, the braking force can be generated from both the first brake and the second brake by the operation of the first brake operating member.

Further, the controller may store a first map and a second map used for the braking force control, the first map and the second map being set such that a magnitude of the braking force of the second brake according to the first operation amount is larger in the second map than in the first map, execute the braking force control using the first map in a case of executing the braking force control when the operating condition of the deceleration control is not satisfied, and execute the braking force control using the second map in a case of executing the braking force control when the operating condition of the deceleration control is satisfied and the second operation amount is less than the first threshold.

According to this configuration, appropriate braking force control can be performed according to the operating condition of the deceleration control.

The first map and the second map may be maps each indicating at least a relationship between the first operation amount and a second target deceleration that is a target deceleration of the vehicle in the braking force control. In the first map, a magnitude of the second target deceleration with respect to the first operation amount at a predetermined amount may be set to a first value, and in the second map, a magnitude of the second target deceleration with respect to the first operation amount at the predetermined amount may be set to a second value larger than the first value.

According to this configuration, the second target deceleration can be varied even with the same operation amount, and appropriate braking force control can be performed.

The first brake may be a mechanical brake mechanically connected to the first brake operating member, and the second brake may be a hydraulic brake that generates a braking force by a hydraulic pressure.

According to this configuration, for example, it is possible to reduce the number of components of the vehicle brake control apparatus and to achieve miniaturization as compared with a structure in which both the first brake and the second brake are hydraulic brakes.

The controller may control the braking force of the first brake based on the second operation amount when the second operation amount is equal to or greater than a third threshold.

According to this configuration, the braking force can be generated from the first brake and the second brake by the operation of at least one of the first brake operating member or the second brake operating member.

Brief Description of Drawings

[FIG. 1] FIG. 1 is a diagram illustrating a configuration of a bar-handle vehicle including a vehicle brake control apparatus according to an embodiment.
[FIG. 2] FIG. 2 is a flowchart illustrating operations of a controller.
[FIG. 3] FIG. 3 is a flowchart illustrating BA flag setting processing.
[FIG. 4] FIG. 4 is a flowchart illustrating warning flag setting processing.
[FIG. 5] FIG. 5 is a map illustrating a relationship between a vehicle body velocity, a first distance threshold, and a second distance threshold.

Description of Embodiments

Hereinafter, an embodiment will be described in detail with reference to the drawings as appropriate.

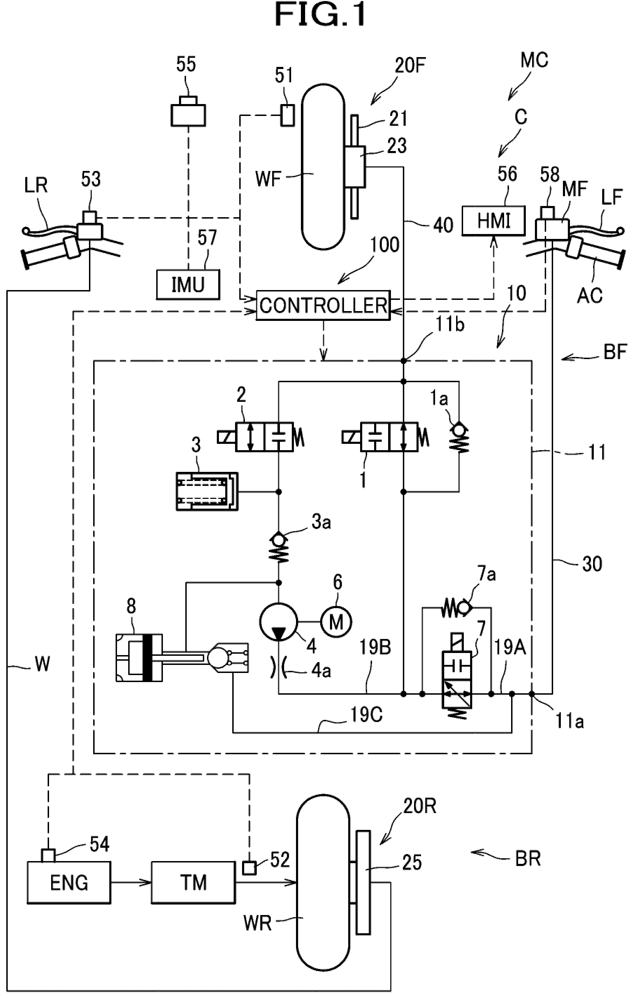

As illustrated in FIG. 1, a motorcycle MC that is a bar-handle vehicle includes a rear wheel WR as an example of a first wheel, a front wheel WF as an example of a second wheel, an engine ENG, a transmission TM, and a vehicle brake control apparatus C.

The engine ENG is a drive source configured to cause the motorcycle MC to travel. The engine ENG is connected to the rear wheel WR via the transmission TM. That is, in the motorcycle MC of the embodiment, the rear wheel WR is a driving wheel and the front wheel WF is a driven wheel. The engine ENG is provided with a throttle sensor 54 that detects an opening degree of a throttle valve of the engine ENG. The opening degree of the throttle valve increases as an operation amount of an accelerator AC increases. The transmission TM is a mechanism that changes a driving force of the engine ENG and transmits the driving force to the rear wheel WR. A speed detection sensor 52 is provided near an output shaft of the transmission TM.

The speed detection sensor 52 is a sensor (a so-called speedometer sensor) that detects a wheel speed of the rear wheel WR, and detects a wheel speed corresponding to a speed displayed by a speedometer (not illustrated). The speed detection sensor 52 has a different detection mode from a wheel speed sensor 51 that detects a wheel speed of the front wheel WF. The wheel speed sensor 51 is a sensor that generates a pulse wave as the wheel rotates.

The vehicle brake control apparatus C includes a brake system BF of the front wheel WF, a brake system BR of the rear wheel WR, an angle sensor 53 as an example of a first detection device, a second angle sensor 58 as an example of a second detection device, a camera 55 as an example of an external environment information acquisition device, an HMI 56 as a notification device, an IMU 57 as a vehicle state detection device, and a controller 100.

The brake system BF mainly includes a front brake lever LF as an example of a second brake operating member, a master cylinder MF, a hydraulic pressure unit 10, a front brake 20F as an example of a second brake, a pipe 30 connecting the master cylinder MF and an input port 11a of the hydraulic pressure unit 10, and a pipe 40 connecting an output port 11b of the hydraulic pressure unit 10 and the front brake 20F.

The front brake lever LF is an operating lever configured to operate the front brake 20F, is disposed on the right side of a handlebar of the motorcycle MC, and can be operated by a driver's right hand. The front brake lever LF is connected to the front brake 20F via the master cylinder MF, the pipe 30, the hydraulic pressure unit 10, and the pipe 40.

The master cylinder MF is a device that outputs a hydraulic pressure corresponding to an operation amount of the front brake lever LF.

The front brake 20F is a brake that brakes the front wheel WF. The front brake 20F is a hydraulic brake that generates a braking force by a hydraulic pressure. The front brake 20F mainly includes a brake rotor 21, a brake pad (not illustrated), and a wheel cylinder 23 that generates a brake force (braking force) by pushing the brake pad against the brake rotor 21 by a hydraulic pressure output from the master cylinder **MF.**

The hydraulic pressure unit 10 is a unit that generates a braking force of the front brake 20F by applying a hydraulic pressure to the front brake 20F. The hydraulic pressure unit 10 is implemented by disposing various solenoid valves and the like on a pump body 11 that is a base body having a fluid line (a hydraulic pressure line) through which a brake fluid flows. In a normal state, a continuous fluid line runs from the input port 11a to the output port 11b of the pump body 11, so that the hydraulic pressure output from the master cylinder MF is transmitted to the front brake 20F.

On a hydraulic pressure line connecting the input port 11a and the output port 11b, a pressure regulator 7 is provided that changes the hydraulic pressure applied to the front brake 20F in accordance with a command current value output from the controller 100. The pressure regulator 7 is a normally open proportional solenoid valve, and is capable of adjusting a difference between a hydraulic pressure upstream and a hydraulic pressure downstream of the pressure regulator in accordance with the command current value. Specifically, the pressure regulator 7 increases the difference between the hydraulic pressure upstream and the hydraulic pressure downstream of the pressure regulator 7 as the magnitude of the command current value increases. At the pressure regulator 7, a check valve 7a allowing only a flow to an output port 11b side is provided in parallel to the pressure regulator.

An inlet valve 1, which is a normally open solenoid valve, is disposed on a hydraulic pressure line between the pressure regulator 7 and the output port 11b. At the inlet valve 1, a check valve 1a allowing only a flow to a pressure regulator 7 side is provided in parallel to the inlet valve.

A reflux hydraulic pressure line 19B connected to a hydraulic pressure line between the pressure regulator 7 and the inlet valve 1 via an outlet valve 2 formed of a normally closed solenoid valve is provided from a hydraulic pressure line between the output port 11b and the inlet valve 1.

A reservoir 3 for temporarily absorbing a surplus brake fluid, a check valve 3a, a pump 4, and an orifice 4a are arranged in this order from an outlet valve 2 side on the reflux hydraulic pressure line 19B. The check valve 3a is disposed to allow only a flow to the hydraulic pressure line between the pressure regulator 7 and the inlet valve 1. The pump 4 is driven by a motor 6, and is provided to generate a pressure toward the hydraulic pressure line between the pressure regulator 7 and the inlet valve 1. The orifice 4a attenuates pulsation of the pressure of the brake fluid discharged from the pump 4 and pulsation generated by operation of the pressure regulator 7.

An introduction hydraulic pressure line 19A, which connects the input port 11a and the pressure regulator 7, and a portion between the check valve 3a and the pump 4 in the reflux hydraulic pressure line 19B are connected by a suction hydraulic pressure line 19C. A mechanical suction valve 8 is provided in the suction hydraulic pressure line 19C.

The suction valve 8 switches between a state of opening the suction hydraulic pressure line 19C and a state of blocking the suction hydraulic pressure line 19C. The suction valve 8 is normally closed, and is opened by a difference between a hydraulic pressure of a hydraulic fluid on a master cylinder MF side and a hydraulic pressure of a hydraulic fluid on a suction port side of the pump 4 that is a vacuum pressure by operation of the pump 4.

In the hydraulic pressure unit 10 configured as described above, in a normal state, each solenoid valve is not energized, and a brake hydraulic pressure introduced from the input port 11a is output to the output port 11b through the pressure regulator 7 and the inlet valve 1, and is applied to the front brake 20F as it is. When reducing an excessive brake hydraulic pressure of the front brake 20F, for example, when performing anti-locking braking control, the inlet valve 1 is closed and the outlet valve 2 is opened to allow the brake fluid to flow to the reservoir 3 through the reflux hydraulic pressure line 19B, so that the brake fluid of the front brake 20F can be drained. When performing pressure increase to the front brake 20F by the pump 4, the suction valve 8 is opened by driving the motor 6, and the brake fluid can be actively supplied to the front brake 20F by an increased pressure of the pump 4. Further, when it is desired to adjust the degree of the pressure increase to the front brake 20F, the adjustment can be performed by adjusting a current flowing through the pressure regulator 7.

The brake system BR mainly includes a rear brake lever LR as an example of a first brake operating member, the angle sensor 53, a rear brake 20R as an example of a first brake, and a wire W connecting the rear brake lever LR and the rear brake 20R.

The rear brake lever LR is an operating lever configured to operate the rear brake 20R, is disposed on the left side of the handlebar of the motorcycle MC, and can be operated by the driver's left hand. The rear brake lever LR is mechanically connected to the rear brake 20R via the wire W.

The angle sensor 53 is a sensor configured to detect an operation angle of the rear brake lever LR as an example of a first operation amount. The operation angle of the rear brake lever LR varies according to the operation of the rear brake lever LR.

The second angle sensor 58 is a sensor configured to detect an operation angle of the front brake lever LF as an example of a second operation amount. The operation angle of the front brake lever LF varies according to the operation of the front brake lever LF. Whether the front brake lever LF is operated can be determined by detecting a variation in the operation angle of the front brake lever LF.

The rear brake 20R is a brake that brakes the rear wheel WR, and is a mechanical brake that operates when a force generated at the time the rear brake lever LR is gripped is transmitted via the wire W. The rear brake 20R cannot be operated by the front brake lever LF. The rear brake 20R is, for example, a drum brake, and includes a drum 25, a brake shoe (not illustrated), and a return spring (not illustrated).

The drum 25 is rotatable integrally with the rear wheel WR. The brake shoe is rotatable between a contact position where the brake shoe comes into contact with an inner peripheral surface of the drum 25 and a separation position where the brake shoe is separated from the inner peripheral surface of the drum 25. The return spring biases the brake shoe from the contact position to the separation position. When the driver grips the rear brake lever LR, the wire W is pulled by the rear brake lever LR, whereby the brake shoe rotates from the separation position toward the contact position against a biasing force of the return spring.

The camera 55 is a device that acquires external environment information on surroundings of the motorcycle MC. The camera 55 captures an image of the front of the motorcycle MC and outputs captured image information to the controller 100 as external environment information.

The HMI 56 is a "human machine interface", and is a device configured to perform notification of prompting the driver to perform an operation of decelerating the motorcycle MC. The HMI 56 includes a monitor capable of displaying a distance from the motorcycle MC to an obstacle in front of the motorcycle MC, and a lamp capable of emitting light for warning.

The IMU 57 is an "inertial measurement unit" and is a device that measures a state of the motorcycle MC including a posture of the motorcycle MC. In order to detect a three-dimensional inertial motion (a translational motion and a rotational motion in three axial directions), the IMU 57 includes an acceleration sensor that detects a translational motion and an angular velocity sensor that detects a rotational motion. The IMU 57 outputs detected information to the controller 100.

The controller 100 includes, for example, a central processing unit (CPU), a random access memory (RAM), a read only memory (ROM), and an input and output circuit. The controller 100 controls the hydraulic pressure unit 10 by performing various types of calculation processing based on inputs from the wheel speed sensor 51, the speed detection sensor 52, the angle sensors 53 and 58, the throttle sensor 54, the camera 55 and the IMU 57, and programs, data, and the like stored in the ROM.

The controller 100 can execute deceleration control of decelerating the vehicle based on a target deceleration of the vehicle set based on the external environment information and a vehicle deceleration obtained by detection or calculation. The controller 100 can execute automatic brake control, braking force control, and brake assist control as the deceleration control.

The controller 100 has a function of calculating a distance D between an obstacle in front of the motorcycle MC and the motorcycle MC and a relative speed VD, which is a speed of the motorcycle MC with respect to the obstacle, based on the image information acquired from the camera 55. The controller 100 executes the deceleration control on condition that a first condition that the distance D is equal to or less than a first distance threshold Dth1 and an absolute value of the relative speed VD is equal to or greater than a first speed threshold is satisfied. That is, the first condition is an operating condition of the deceleration control.

The automatic brake control is control of decelerating the motorcycle MC based on a required deceleration Dc of the motorcycle MC set based on the image information acquired from the camera 55 and an actual vehicle body deceleration (hereinafter, also referred to as an "actual deceleration Dr"). Here, the actual deceleration Dr can be calculated based on, for example, a wheel speed acquired from the wheel speed sensor 51. The controller 100 executes the automatic brake control on condition that neither of the brake levers LF and LR is operated.

In the embodiment, the controller 100 calculates the relative speed VD by subtracting a speed of the motorcycle MC from a speed of the obstacle ahead. Therefore, when the motorcycle MC approaches the obstacle ahead, the relative speed VD is calculated to be a negative value. The controller 100 determines whether the absolute value of the relative speed VD is equal to or greater than the first speed threshold (a positive value) by determining whether the relative speed VD is equal to or less than a speed threshold VDth that is a negative value.

The controller 100 performs the notification by the HMI 56 on condition that a second condition that the distance D is equal to or less than a second distance threshold Dth2 greater than the first distance threshold Dth1 and the absolute value of the relative speed VD is equal to or greater than a second speed threshold is satisfied. In the embodiment, the first speed threshold and the second speed threshold are set to the same value. Therefore, the controller 100 also determines whether the absolute value of the relative speed VD is equal to or greater than the second speed threshold (a positive value) by determining whether the relative speed VD is equal to or less than the speed threshold VDth.

The controller 100 has a function of setting the first distance threshold Dth1 and the second distance threshold Dth2 based on a vehicle body velocity. The vehicle body velocity can be calculated based on, for example, the wheel speed acquired from the wheel speed sensor 51.

Specifically, the controller 100 stores a map illustrated in FIG. 6. The map is a map illustrating a relationship between the vehicle body velocity (V1, V2, V3, where V1 < V2 < V3), the first distance threshold Dth1, and the second distance threshold Dth2. In the map, a relationship between magnitudes of values D1, D2, and D3 is D1 < D2 < D3, and a relationship between magnitudes of values D4, D5, and D6 is D4 < D5 < D6.

That is, the first distance threshold Dth1 and the second distance threshold Dth2 are set to larger values as the vehicle body velocity increases. At a predetermined vehicle body velocity (for example, any one of V1, V2, or V3), the second distance threshold Dth2 is greater than the first distance threshold Dth1. That is, D4 > D1, D5 > D2, and D6 > D3.

The values D1 to D6 in the map are set based on a time to collision (TTC). Here, the TTC refers to a remaining time Tr until a collision when the motorcycle MC and the obstacle ahead maintain respective current speeds thereof. The remaining time Tr is calculated by the following equation (1).

$$Tr = D \div (Vs - Vf) \quad (1)$$

D:   a distance between the motorcycle MC and an obstacle in front of the motorcycle MC
Vs:  a speed of the motorcycle MC
Vf:  a speed of the obstacle ahead

The braking force control is control of controlling the braking force of the front brake 20F based on an operation angle $\theta r$ of the rear brake lever LR when the operation angle $\theta r$ is equal to or greater than a second threshold $\theta th2$.

Specifically, the controller 100 drives the motor 6 and controls the pressure regulator 7 to execute the braking force control. The controller 100 calculates a command current value to be output to the pressure regulator 7 based on an operation angle $\theta$ and the actual vehicle body deceleration (hereinafter, also referred to as the "actual deceleration Dr"). The controller 100 increases the command current value as the operation angle $\theta$ increases, and increases the command current value as a magnitude of the actual deceleration Dr decreases.

The controller 100 stores a first map and a second map used for the braking force control. The first map and the second map are maps each indicating at least a relationship between the operation angle $\theta r$ and a second target deceleration that is a target deceleration of the vehicle in the braking force control. In both the first map and the second map, the magnitude of the second target deceleration is set to be larger as the operation angle $\theta r$ increases.

In the first map, the magnitude of the second target deceleration with respect to the operation angle $\theta r$ at a predetermined amount is set to a first value, and in the second map, the magnitude of the second target deceleration with respect to the operation angle $\theta r$ at the predetermined amount is set to a second value larger than the first value. Specifically, a graph of the second target deceleration in the second map is offset to a side where the magnitude of the deceleration increases with respect to a graph of the second target deceleration in the first map. That is, the magnitude of the braking force of the front brake 20F corresponding to the operation angle $\theta r$ is set to be larger in the second map than in the first map.

In a case of executing the braking force control when the operating condition of the deceleration control is not satisfied, the controller 100 executes the braking force control using the first map. In a case of executing the braking force control when the operating condition of the deceleration control is satisfied and an operation angle $\theta f$ of the front brake lever LF is less than the first threshold $\theta th1$, the controller 100 executes the braking force control using the second map. In the following description, the braking force control using the first map is also referred to as "first braking force control", and the braking force control using the second map is also referred to as "second braking force control".

The brake assist control is control of decelerating the vehicle at a deceleration corresponding to the operation angle $\theta f$ when the operating condition of the deceleration control is satisfied and the operation angle $\theta f$ of the front brake lever LF is equal to or greater than the first threshold $\theta th1$. For example, the controller 100 sets a target hydraulic pressure of the front brake 20F by multiplying the operation angle $\theta f$ by a predetermined conversion coefficient, and controls the motor 6 and the pressure regulator 7 such that the hydraulic pressure of the front brake 20F is the target hydraulic pressure.

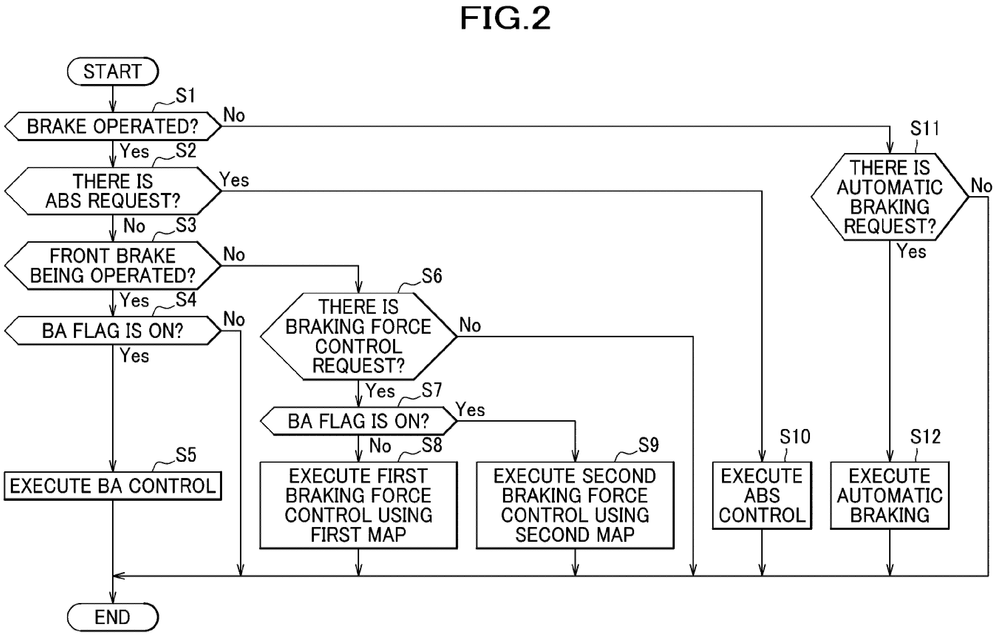

Next, operations of the controller 100 will be described in detail. The controller 100 repeatedly executes processing illustrated in FIG. 2 at all times.

In the processing illustrated in FIG. 2, the controller 100 first determines whether any one of the brake lever LF or the brake lever LR is operated (hereinafter also referred to as a "brake operation") (S1). Specifically, in step S1, the controller 100 determines whether the brake is operated by determining whether the operation angles $\theta f$ and $\theta r$ are equal to or greater than thresholds. The threshold to be compared with $\theta f$ in step S1 may be the same value as the first threshold $\theta th1$, or may be a value different from the first threshold $\theta th1$, for example, a value smaller than the first threshold $\theta th1$. The threshold to be compared with $\theta r$ may be the same value as the second threshold $\theta th2$, or may be a value different from the second threshold $\theta th2$, for example, a value smaller than the second threshold $\theta th2$. When it is determined in step S1 that a brake is operated (Yes), the controller 100 determines whether there is a request for anti-locking braking control (hereinafter, also referred to as an "ABS request") (S2).

When it is determined in step S2 that there is no ABS request (No), the controller 100 determines whether the front brake lever LF is being operated by determining whether the operation angle $\theta f$ is equal to or greater than the first threshold $\theta th1$ (S3). When it is determined in step S3 that the front brake lever LF is being operated (Yes), it is determined whether a brake assist flag (hereinafter, also referred to as a "BA flag") for executing brake assist control (hereinafter, also referred to as "BA control") is on, that is, whether the BA flag is set (S4).

When it is determined in step S4 that the BA flag is on (Yes), the controller 100 executes the BA control (S5) and ends the processing. When it is determined in step S4 that the BA flag is not on (No), the controller 100 ends the processing without performing the BA control.

When it is determined in step S3 that the front brake lever LF is not being operated (No), the controller 100 determines whether there is a request for the braking force control (S6). Specifically, in step S6, the controller 100 determines whether the operation angle $\theta r$ of the rear brake lever LR is equal to or greater than the second threshold $\theta th2$, and determines that there is a request for the braking force control when it is determined to be $\theta r \geq \theta th2$.

When it is determined in step S6 that there is a request for the braking force control (Yes), the controller 100 determines whether the BA flag is on (S7). When it is determined in step S7 that the BA flag is not on (No), the controller 100 executes the first braking force control using the first map (S8), and ends the processing. When it is determined in step S7 that the BA flag is on (Yes), the controller 100 executes the second braking force control using the second map (S9), and ends the processing.

When it is determined in step S2 that there is an ABS request (Yes), the controller 100 executes ABS control (S10) and ends the processing. When it is determined in step S1 that no brake is operated (No), the controller 100 determines whether there is a request for the automatic brake control (hereinafter also referred to as "automatic braking") (S11).

When it is determined in step S11 that there is a request for the automatic braking (Yes), the controller 100 executes the automatic braking (S12) and ends the processing. When it is determined in step S11 that there is no request for the automatic braking (No), the controller 100 ends the processing without performing the automatic braking.

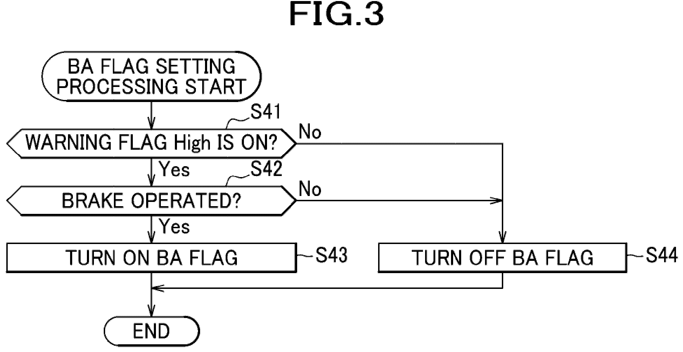

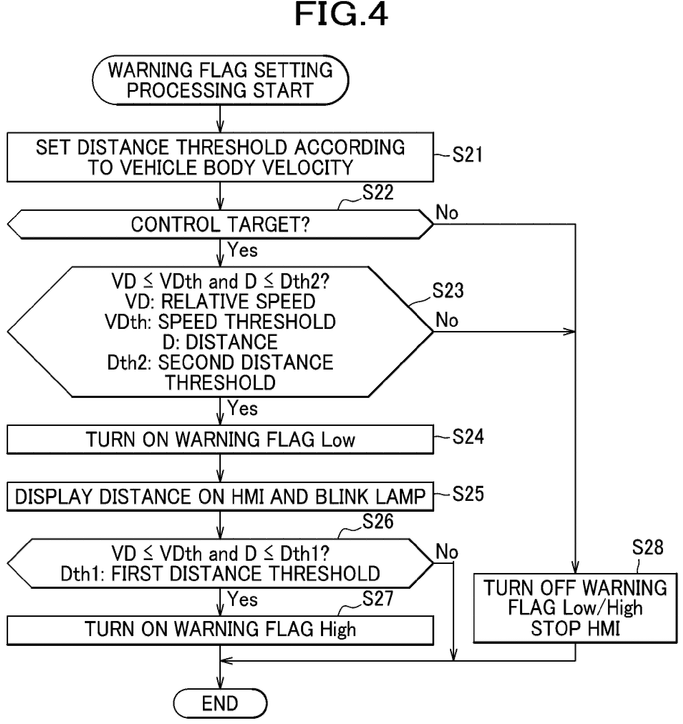

The controller 100 repeats BA flag setting processing illustrated in FIG. 3 and warning flag setting processing illustrated in FIG. 4 at all times. First, the warning flag setting processing illustrated in FIG. 4 will be described.

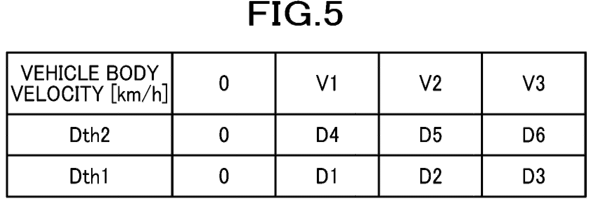

As illustrated in FIG. 4, in the warning flag setting processing, the controller 100 first sets the first distance threshold Dth1 and the second distance threshold Dth2 according to the vehicle body velocity using the map illustrated in FIG. 5 (S21). After step S21, the controller 100 determines, based on image information acquired from the camera 55, whether an object in front of the motorcycle MC is a control target for the operating condition of the deceleration control (S22).

Specifically, for example, when an image acquired from the camera 55 is an image of an upward slope, it is determined that the upward slope is not a control target. When the image acquired from the camera 55 is an automobile or the like, it is determined that the automobile is a control target.

When it is determined in step S22 that an object captured by the camera 55 is a control target (Yes), the controller 100 calculates the distance D and the relative speed VD based on the image information acquired from the camera 55, and determines whether the distance D is equal to or less than the second distance threshold Dth2 and the relative speed VD is equal to or less than the speed threshold VDth (S23). In step S23, when it is determined that $D \leq Dth2$ and $VD \leq VDth$ (Yes), the controller 100 turns on, that is, sets a warning flag Low (S24).

After step S24, the controller 100 displays the distance D on the monitor of the HMI 56 and blinks a lamp of the HMI 56 (S25). After step S25, the controller 100 determines whether the distance D is equal to or less than the first distance threshold Dth1 and the relative speed VD is equal to or less than the speed threshold VDth (S26).

When it is determined in step S26 that $D \leq Dth1$ and $VD \leq VDth$ (Yes), the controller 100 turns on a warning flag High (S27), and ends the processing. When it is determined as No in step S22 or step S23, the controller 100 turns off the warning flag Low and the warning flag High, that is, resets the flag, stops the HMI 56 (S28), and ends the processing. When it is determined as No in step S26, the controller 100 ends the processing while maintaining the warning flag Low.

As illustrated in FIG. 3, in the BA flag setting processing, the controller 100 first determines whether the warning flag High is on (S41). When it is determined in step S41 that the warning flag High is on (Yes), the controller 100 determines whether a brake is operated, that is, whether any one of the brake lever LF or the brake lever LR is operated (S42). The determination in step S42 can be performed by, for example, a method similar to that in step S1.

When it is determined in step S42 that a brake is operated (Yes), the controller 100 turns on the BA flag (S43), and ends the processing. When it is determined as No in step S41 or step S42, the controller 100 turns off the BA flag, that is, resets the BA flag (S44), and ends the processing.

Next, a specific example of the operation of the controller 100 will be described in detail.

When the condition of step S26 is satisfied while the motorcycle MC is traveling, the controller 100 turns on the warning flag High (S27). At this time, when the driver is operating a brake, the controller 100 turns on the BA flag in the BA flag setting processing in FIG. 3 (S41 to S43).

When the warning flag High is on and the BA flag is on in a situation where the driver is operating a brake, the controller 100 executes the BA control or the second braking force control in the processing in FIG. 2. Specifically, when the driver is operating only the front brake lever LF or operating both the brake levers LF and LR, the controller 100 determines Yes in step S3, and then determines Yes in step S4 to execute the BA control (S5). When the driver is operating only the rear brake lever LR, the controller 100 determines No in step S3, then determines Yes in both steps S6 and S7 to execute the second braking force control (S9).

As described above, the following effects can be obtained according to the embodiment.

When the operating condition of the deceleration control is satisfied during the operation of the front brake lever LF and the BA flag is turned on, the BA control based on the operation of the front brake lever LF is executed, so that the operation of the driver can be assisted to decelerate the vehicle.

Since the condition that the distance is equal to or less than the first distance threshold and the absolute value of the relative speed is equal to or greater than the first speed threshold is set as the operating condition of the deceleration control, the deceleration control can be appropriately executed based on the distance and the relative speed.

Since the controller 100 calculates the vehicle deceleration, a sensor or the like that detects the vehicle deceleration is unnecessary.

Since the controller 100 executes the braking force control of controlling the braking force of the front brake 20F based on the operation angle $\theta r$ of the rear brake lever LR, the braking force can be generated from both the front brake 20F and the rear brake 20R by the operation of the rear brake lever LR.

Since the controller 100 selects the first braking force control and the second braking force control according to the operating condition of the deceleration control, it is possible to perform appropriate braking force control according to the operating condition of the deceleration control.

In the first map, the magnitude of the second target deceleration with respect to the first operation amount at a predetermined amount is set to the first value, and in the second map, the magnitude of the second target deceleration with respect to the first operation amount at the predetermined amount is set to the second value larger than the first value, so that the second target deceleration can be varied even with the same operation amount, and appropriate braking force control can be performed.

Since the rear brake 20R is a mechanical brake and the front brake 20F is a hydraulic brake, the number of components of the vehicle brake control apparatus C can be reduced and the vehicle brake control apparatus C can be miniaturized as compared with, for example, a structure in which both the first brake and the second brake are hydraulic brakes.

In a case where the warning flag High is turned on when only the rear brake lever LR is operated, a braking force larger than that in the normal first braking force control is obtained by the second braking force control, and thus, for example, even an unskilled driver who cannot operate the front brake lever LF can generate a braking force larger than that in the normal state by operating only the rear brake lever LR.

The invention is not limited to the above-described embodiment, and can be used in various forms as exemplified below.

Although the first brake is a mechanical brake and the second brake is a hydraulic brake in the above-described embodiment, for example, both the first brake and the second brake may be hydraulic brakes. In this case, in the vehicle brake control apparatus, the controller may control the braking force of the first brake based on the second operation amount when the second operation amount is equal to or greater than a third threshold.

According to this configuration, by operating either the first brake operating member or the second brake operating member, both the first brake and the second brake can be operated.

The wheel speed may be detected by a global positioning system (GPS) or the like.

The operation amount may be a parameter that varies according to an operation of a brake operating member, and may be, for example, a hydraulic pressure when the hydraulic pressure varies according to the operation of the brake operating member. In this case, the detection device may be a sensor that detects the hydraulic pressure.

The color of warning light may be changed between when the warning flag Low is on and when the warning flag High is on. Specifically, for example, the warning light may be yellow when the warning flag Low is on, and the warning light may be red when the warning flag High is on.

The external environment information acquisition device may be a distance sensor capable of detecting a distance to an obstacle in front of the vehicle, or the like.

The actual deceleration Dr may be detected by an acceleration sensor or the like.

The first speed threshold and the second speed threshold may be different values. Each of the first speed threshold and the second speed threshold may be set according to the vehicle body velocity.

Although the operation angle of the brake lever is exemplified as the operation amount in the above-described embodiment, the operation amount may be, for example, a stroke amount detected by a stroke sensor configured to detect a stroke of an operating member such as a brake lever or a foot brake, or may be a distance detected by a distance sensor such as an infrared ray sensor configured to detect a distance between an operating member and a support member movably supporting the operating member.

The second brake is not limited to a hydraulic brake, and may be, for example, an electromagnetic brake. The first brake is not limited to a mechanical brake, and may be, for example, an electromagnetic brake or a hydraulic brake. The second brake may be a rear wheel brake, and the first brake may be a front wheel brake.

The vehicle provided with the first brake and the second brake is not limited to the motorcycle MC, and may be any vehicle. For example, the vehicle may be a bar-handle vehicle operated by a bar handle. The bar handle vehicle may be, for example, a three-wheeled vehicle or a four-wheeled vehicle.

The brake operating member is not limited to a lever, and may be, for example, a foot brake pedal.

The suction valve may be a normally closed solenoid valve.

The drive source may be a motor or the like configured to cause the vehicle to travel.

The elements described in the above-described embodiment and the modification may be combined as desired and implemented.

## Claims

1. A vehicle brake control apparatus comprising:

   a first brake operating member configured to operate a first brake for braking a first wheel;
   a second brake operating member configured to operate a second brake for braking a second wheel;
   a second detection device configured to detect a second operation amount that varies according to an operation of the second brake operating member;
   an external environment information acquisition device configured to acquire external environment information on surroundings of a vehicle; and
   a controller, wherein
   the controller is configured to execute

   deceleration control of decelerating the vehicle based on a target deceleration of the vehicle set based on the external environment information and a vehicle deceleration obtained by detection or calculation, and
   brake assist control of decelerating the vehicle at a deceleration corresponding to the second operation amount when an operating condition of the deceleration control is satisfied and the second operation amount is equal to or greater than a first threshold.

2. The vehicle brake control apparatus according to claim 1, wherein

   the controller is configured to calculate, based on the external information, a distance between an obstacle in front of the vehicle and the vehicle and a relative speed that is a speed of the vehicle with respect to the obstacle, and
   the operating condition of the deceleration control is a condition that the distance is equal to or less than a first distance threshold and an absolute value of the relative speed is equal to or greater than a first speed threshold.

3. The vehicle brake control apparatus according to claim 1, wherein
   the controller calculates the vehicle deceleration based on a wheel speed.

4. The vehicle brake control apparatus according to claim 1, further comprising:

   a first detection device configured to detect a first operation amount that varies according to an operation of the first brake operating member, wherein

   the controller executes braking force control of controlling a braking force of the second brake based on the first operation amount when the first operation amount is equal to or greater than a second threshold.

5. The vehicle brake control apparatus according to claim 4, wherein

   the controller stores a first map and a second map used for the braking force control, the first map and the second map being set such that a magnitude of the braking force of the second brake corresponding to the first operation amount is larger in the second map than in the first map,
   executes the braking force control using the first map in a case of executing the braking force control when the operating condition of the deceleration control is not satisfied, and
   executes the braking force control using the second map in a case of executing the braking force control when the operating condition of the deceleration control is satisfied and the second operation amount is less than the first threshold.

6. The vehicle brake control apparatus according to claim 5, wherein

   the first map and the second map are maps each indicating at least a relationship between the first operation amount and a second target deceleration that is a target deceleration of the vehicle in the braking force control,
   in the first map, a magnitude of the second target deceleration with respect to the first operation amount at a predetermined amount is set to a first value, and
   in the second map, a magnitude of the second target deceleration with respect to the first operation amount at the predetermined amount is set to a second value larger than the first value.

7. The vehicle brake control apparatus according to any one of claims 1 to 6, wherein

   the first brake is a mechanical brake mechanically connected to the first brake operating member, and
   the second brake is a hydraulic brake that generates a braking force by a hydraulic pressure.

8. The vehicle brake control apparatus according to claim 4, wherein
   the controller controls a braking force of the first brake based on the second operation amount when the second operation amount is equal to or greater than a third threshold.

# FIG.1

# FIG.2

START

S1 — BRAKE OPERATED? — No

Yes / S2

S2 — THERE IS ABS REQUEST? — Yes

No / S3

S3 — FRONT BRAKE BEING OPERATED? — No

Yes / S4

S4 — BA FLAG IS ON? — No

Yes

S5 — EXECUTE BA CONTROL

S6 — THERE IS BRAKING FORCE CONTROL REQUEST? — No

Yes / S7

S7 — BA FLAG IS ON? — Yes

No / S8

S8 — EXECUTE FIRST BRAKING FORCE CONTROL USING FIRST MAP

S9 — EXECUTE SECOND BRAKING FORCE CONTROL USING SECOND MAP

S10 — EXECUTE ABS CONTROL

S11 — THERE IS AUTOMATIC BRAKING REQUEST? — No

Yes

S12 — EXECUTE AUTOMATIC BRAKING

END

EP 4 617 161 A1

# FIG.3

```
        ┌─────────────────────┐
        │   BA FLAG SETTING    │
        │  PROCESSING START    │
        └─────────────────────┘
                   │          ⌐S41
                   ▼
        ◁ WARNING FLAG High IS ON? ▷────No──────────────┐
                   │ Yes       ⌐S42                      │
                   ▼                                     │
        ◁     BRAKE OPERATED?      ▷────No────────┐      │
                   │ Yes                          │      │
                   ▼                              ▼      ▼
        ┌─────────────────────┐           ┌──────────────────┐
        │   TURN ON BA FLAG    │─S43       │  TURN OFF BA FLAG │─S44
        └─────────────────────┘           └──────────────────┘
                   │◄─────────────────────────────────┘
                   ▼
              ┌─────────┐
              │   END   │
              └─────────┘
```

# FIG.4

WARNING FLAG SETTING
PROCESSING START

SET DISTANCE THRESHOLD ACCORDING
TO VEHICLE BODY VELOCITY ～S21

CONTROL TARGET? ～S22 → No

Yes

$VD \leq VDth$ and $D \leq Dth2$? ～S23 → No
VD: RELATIVE SPEED
VDth: SPEED THRESHOLD
D: DISTANCE
Dth2: SECOND DISTANCE
THRESHOLD

Yes

TURN ON WARNING FLAG Low ～S24

DISPLAY DISTANCE ON HMI AND BLINK LAMP ～S25

$VD \leq VDth$ and $D \leq Dth1$? ～S26 → No
Dth1: FIRST DISTANCE THRESHOLD

Yes ～S27

TURN ON WARNING FLAG High

S28
TURN OFF WARNING
FLAG Low/High
STOP HMI

END

# FIG.5

| VEHICLE BODY VELOCITY [km/h] | 0 | V1 | V2 | V3 |
|---|---|---|---|---|
| Dth2 | 0 | D4 | D5 | D6 |
| Dth1 | 0 | D1 | D2 | D3 |

## INTERNATIONAL SEARCH REPORT

| International application No. |
| --- |
| **PCT/JP2023/026515** |

| | |
| --- | --- |
| **A.   CLASSIFICATION OF SUBJECT MATTER** | |
| *B62L 3/08*(2006.01)i; *B60T 7/12*(2006.01)i; *B60T 8/00*(2006.01)i; *B60T 8/17*(2006.01)i<br>FI:   B60T8/00 C; B60T7/12 C; B62L3/08; B60T8/17 B | |
| According to International Patent Classification (IPC) or to both national classification and IPC | |

**B.   FIELDS SEARCHED**

Minimum documentation searched (classification system followed by classification symbols)

B62L3/08; B60T7/12; B60T8/00; B60T8/17

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| Y | JP 2017-24645 A (HONDA MOTOR CO LTD) 02 February 2017 (2017-02-02)<br>paragraphs [0011], [0016], [0026]-[0028], [0034]-[0036], fig. 3-4 | 1-3 |
| A | | 4-8 |
| Y | JP 2017-43305 A (ISUZU MOTORS LTD) 02 March 2017 (2017-03-02)<br>paragraphs [0018], [0022]-[0024], fig. 1 | 1-3 |
| Y | JP 2017-185947 A (SUZUKI MOTOR CORP) 12 October 2017 (2017-10-12)<br>paragraphs [0040]-[0041], fig. 3 | 2 |
| A | WO 2022/025095 A1 (HITACHI ASTEMO LTD) 03 February 2022 (2022-02-03)<br>fig. 5-6 | 1-8 |
| A | WO 2019/131504 A1 (HONDA MOTOR CO LTD) 04 July 2019 (2019-07-04)<br>fig. 5 | 1-8 |

| ☐ Further documents are listed in the continuation of Box C. | ✓ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 August 2023** | **15 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/026515**

| Patent document cited in search report | | | Publication date (day/month/year) | Patent family member(s) | | | Publication date (day/month/year) |
|---|---|---|---|---|---|---|---|
| JP | 2017-24645 | A | 02 February 2017 | US paragraphs [0029]-[0030], [0037], [0050]-[0053], [0063]-[0069], fig. 3-4 EP | 2017/0028972 3124370 | A1 A2 | |
| JP | 2017-43305 | A | 02 March 2017 | (Family: none) | | | |
| JP | 2017-185947 | A | 12 October 2017 | (Family: none) | | | |
| WO | 2022/025095 | A1 | 03 February 2022 | (Family: none) | | | |
| WO | 2019/131504 | A1 | 04 July 2019 | US fig. 5 EP CN | 2020/0391732 3734050 111527295 | A1 A1 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022025095 A